(19) Europäisches Patentamt

European Patent Office

Office européen des brevets

(11) **EP 1 445 267 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(51) Int Cl.:
*C08F 279/02* *(2006.01)*   *C08F 291/02* *(2006.01)*
*C08F 279/04* *(2006.01)*   *G01N 21/65* *(2006.01)*

(21) Anmeldenummer: **04001509.1**

(22) Anmeldetag: **24.01.2004**

(54) **Verfahren zur verbesserten Herstellung von Pfropfpolymerisaten**

Process for an improved preparation of a graft copolymer

Procédé pour améliorer la préparation d' un copolymère greffé

(84) Benannte Vertragsstaaten:
**AT BE BG CH CY CZ DE DK EE ES FI FR GB GR HU IE IT LI LU MC NL PT RO SE SI SK TR**

(30) Priorität: **06.02.2003 DE 10304817**

(43) Veröffentlichungstag der Anmeldung:
**11.08.2004 Patentblatt 2004/33**

(73) Patentinhaber: **LANXESS Deutschland GmbH**
**51369 Leverkusen (DE)**

(72) Erfinder:
• **Buchholz, Vera, Dr.**
**50823 Köln (DE)**

• **Wenz, Eckard, Dr.**
**50679 Köln (DE)**
• **Eichenauer, Herbert, Dr.**
**41539 Dormagen (DE)**
• **Born, Ralf-Jürgen, Dr.**
**55218 Ingelheim (DE)**
• **Lange, Christian, Dr.**
**59494 Soest (DE)**
• **Hobeika, Sven, Dr.**
**42699 Solingen (DE)**

(56) Entgegenhaltungen:
WO-A-00/49395        WO-A-03/038414
WO-A-03/038415        GB-A- 1 200 414
GB-A- 1 528 418        US-A- 4 155 901
US-A1- 2002 156 205

**Beschreibung**

Die vorliegende Erfindung betrifft ein verbessertes Verfahren zur Herstellung von Pfropfpolymeren vom ABS-Typ unter Verwendung der Raman-Spektroskopie zur Ermittlung von Abweichungen vom vorgegebenen Sollreaktionsverlauf.

Pfropfpolymere vom ABS-Typ sind Zweiphasenkunststoffe aus einem thermoplastischen Copolymerisat harzbildender Monomerer z.B. Styrol und Acrylnitril, sowie mindestens einem Pfropfpolymerisat, welches erhältlich ist durch Polymerisation eines oder mehrerer harzbildender Monomerer, z.B. der oben genannten, in Gegenwart eines Kautschuks, z.B. Butadienhomo- oder - copolymerisat als Pfropfgrundlage.

Der Begriff Pfropfpolymere vom ABS-Typ umfasst im Rahmen der vorliegenden Erfindung auch solche Zusammensetzungen, in denen diese Bestandteile ganz oder teilweise durch analoge Bestandteile ersetzt wurden. Beispiele für analoge Bestandteile für Styrol sind z.B. α-Methylstyrol, Chlorstyrol, Vinyltoluol, p-Methylstyrol oder tert.-Butylstyrol. Beispiele für analoge Bestandteile für Acrylnitril sind z.B. Methacrylnitril, Ethacrylnitril, Methylmethacrylat oder N-Phenylmaleinimid. Ein analoger Bestandteil für Butadien ist z.B. Isopren.

Pfropfpolymere vom ABS-Typ und Verfahren zu ihrer Herstellung sind im Prinzip bekannt (siehe z.B. Ullmann's Encyclopedia of Industrial Chemistry, Vol. A21, VCH Weinheim, 1992). Diese Pfropfpolymerisate können z.B. durch Polymerisation in Lösung oder nach dem sogenannten Masseverfahren sowie durch Polymerisation in Gegenwart von Wasser (Emulsionspolymerisation, Suspensionspolymerisation) hergestellt werden.

In den aus dem Stand der Technik bekannten Verfahren wird in der Regel versucht, unter Konstanthalten möglichst vieler Prozessparameter (wie z.B. Temperatur, Monomerenzufuhrprofil, Druck usw.) einen möglichst einheitlichen Reaktionsverlauf und damit Produkte mit möglichst reproduzierbaren vorteilhaften Eigenschaften zu erzielen.

Auf großtechnischer Ebene ist die Einhaltung der Prozessparameter jedoch keine Garantie für die absolute Reproduzierbarkeit des Verfahrens und für den Erhalt von Produkten mit vorgegebenen Eigenschaften. Das Reaktionsgeschwindigkeitsprofil kann durch viele Faktoren, wie beispielsweise in den Reaktionspartnern enthaltene Verunreinigungen, Schwankungen der Rührgeschwindigkeit, der Oberflächenbeschaffenheit des Reaktionsgefäßes, Schwankungen in der Partikelgröße usw. beeinflusst werden.

Diese Ursachen können während der Pfropfpolymerisation sowohl zu einer Verarmung als auch zu einer Anreicherung der Reaktionsmischung an einem oder mehreren Monomeren führen.

Ein solches Abweichen der Konzentration eines oder mehrerer Monomere von der zu einem gegebenen Zeitpunkt üblichen Konzentration kann jedoch neben Verschlechterungen der Produktqualität auch zu Problemen unter Sicherheitsaspekten (z.B. Gefahr eines unkontrollierten Reaktionsverlaufs wie z.B. "Durchgehen" der Reaktion) führen.

Gegenstand der vorliegenden Erfindung ist ein Verfahren zur verbesserten Herstellung von Pfropf polymerisaten vom ABS-Typ nach dem Emulsionsverfahren, worin

5 bis 95, vorzugsweise 30 bis 90 Gew.-%, eines Monomergemischs enthaltend

   A) 50 bis 99 Gew.-Teile, vorzugsweise 50 bis 70 Gew.-Teile mindestens eines Vinylaromaten

   B) 1 bis 50 Gew.-Teilen, vorzugsweise 30 bis 50 Gew.-Teile mindestens eines Comonomers
   in Gegenwart von

   C) 95 bis 5, vorzugsweise 70 bis 10 Gew.-% einer oder mehrerer Pfropfgrundlagen mit Glasübergangstemperaturen von <10°C, vorzugsweise <0°C, besonders bevorzugt < -20°C

polymerisiert wird, dadurch gekennzeichnet, dass der Verlauf der Reaktion permanent durch die Aufnahme von Raman-Spektren des Reaktionsgemisches überwacht wird und bei Abweichungen der Konzentration vom gewünschten Wert der unpolymerisierten Vinylaromatenkomponente A) im Reaktionsgemisch von weniger als 12 Gew.-% die Zudosiergeschwindigkeit einzelner oder aller Monomerer und/oder des Initiators erhöht oder gesenkt wird, so dass sich der gewünschte Wert der Konzentration der Vinylaromatenkomponente A) im Reaktionsgemisch von weniger als 12 Gew.-% wieder einstellt.

Geeignete Vinylaromaten A) sind beispielsweise Styrol, α-Methylstyrol sowie kernsubstituierten Vinylaromaten wie beispielsweise p-Methylstyrol und p-Chlorstyrol sowie Gemische dieser Monomere.

Geeignete Comonomere B) sind beispielsweise Vinylcyanide (ungesättigte Nitrile) wie Acrylnitril und Methacrylnitril und/oder (Meth)Acrylsäure-$(C_1$-$C_8)$-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere A) sind ausgewählt aus mindestens einem der Monomere Styrol und α-Methylstyrol, bevorzugte Monomere B) sind ausgewählt aus mindestens einem der Monomere Acrylnitril, N-Phenylmaleinimid und Methylmethacrylat.

Besonders bevorzugte Monomere sind A) Styrol und B) Acrylnitril.

Geeignete Pfropfgrundlagen C) sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke sowie Mischungen hieraus.

Geeignete Acrylatkautschuke gemäß C) sind vorzugsweise Polymerisate aus Acrylsäurealkylestern, gegebenenfalls mit bis zu 40 Gew.-%, bezogen auf C) anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkyl-ester, wie Chlorethylacrylat sowie Mischungen dieser Monomeren.

Bevorzugte weitere polymerisierbare, ethylenisch ungesättigte Monomere, die neben den Acrylsäureestern gegebenenfalls zur Herstellung der Pfropfgrundlage C) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Kautschuke als Pfropfgrundlage C sind Emulsionspolymerisate, die einen Gelgehalt von mindestens 30 Gew.-% aufweisen.

Bei der Herstellung von Acrylatkautschuken können zur Vernetzung Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.%, bezogen auf die Pfropfgrundlage C.

Bei cyclischen vernetzenden Monomeren mit mindestens drei ethylenisch ungesättigten Gruppen ist es vorteilhaft, die Menge auf unter 1 Gew.-% der Pfropfgrundlage C zu beschränken.

Weitere geeignete Pfropfgrundlagen gemäß C) sind Silikonkautschuke mit pfropfaktiven Stellen, wie sie in den DE-A 37 04 657, DE-A 37 04 655, DE-A 36 31 540 und DE-A 36 31 539 beschrieben werden.

Bevorzugte Pfropfgrundlagen C) sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß A und B), mit der Maßgabe, dass die Glasübergangstemperatur der Komponente C unterhalb von 10˚C, vorzugsweise <0˚C, besonders bevorzugt <-10˚C liegt.

Besonders bevorzugt als Pfropfgrundlage C) ist reiner Polybutadienkautschuk.

Der Gelgehalt der Pfropfgrundlage C) beträgt mindestens 30 Gew.-%, vorzugsweise mindestens 40 Gew.-%. Der Gelgehalt der Pfropfgrundlage C) wird bei 25˚C in Toluol bestimmt (M. Hoffmann, H. Krömer, R. Kuhn, Polymeranalytik I und II, Georg Thieme-Verlag, Stuttgart 1977).

Die Pfropfgrundlage C hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Die Pfropfcopolymerisate werden durch radikalische Emulsionspolymerisation hergestellt.

Die Pfropfpolymerisation kann nach beliebigen Zugabeverfahren durchgeführt werden, vorzugsweise wird sie so durchgeführt, dass das Monomergemisch enthaltend A) und B) kontinuierlich zur Pfropfgrundlage C) gegeben und polymerisiert wird.

Dabei werden bevorzugt spezielle Monomer-/Kautschuk-Verhältnisse eingehalten. Bei der Durchführung des erfindungsgemäßen Verfahrens zur Erzeugung von Pfropfpolymeren können die Monomeren gleichmäßig über einen definierten Zeitraum oder unter Anwendung beliebiger Dosiergradienten zu dem Kautschuklatex gegeben werden, beispielsweise derart, dass innerhalb der ersten Hälfte der Gesamtmonomerenzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden. Auch Emulgatoren mit Carboxylgruppen (z.B. Salze von $C_{10}$-$C_{18}$-Fettsäuren, disproportionierte Abietinsäure sowie Emulgatoren gemäß DE-A 36 39 904 und DE-A 39 13 509) können prinzipiell eingesetzt werden.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die Gesamtmonomermenge). Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. $H_2O_2$, Di-tert.-Butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium- oder Kaliumpersulfat, Kaliumperphosphat, Natriumperborat sowie Redox-Systeme in Betracht.

Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur liegt im Allgemeinen zwischen 25˚C und 160˚C, vorzugsweise zwischen 40˚C und 90˚C.

Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10˚C, vorzugsweise mindestens 15˚C und besonders bevorzugt mindestens 20˚C beträgt.

Besonders bevorzugt durch das erfindungsgemäße Verfahren erhältliche Pfropfcopolymerisate sind ABS, wie sie z.B. in der DE-A 20 35 390 (=US-A 3,644,574) oder in der DE-A 22 48 242 (=GB-A 1 409 275) bzw. in Ullmanns Enzyklopädie der Technischen Chemie, Bd. 19 (1980), S. 280 ff. beschrieben sind.

Besonders geeignete Pfropfcopolymerisate sind auch ABS-Polymerisate, die durch Persulfat-Initiierung oder durch Redox-Initiierung mit einem Initiatorsystem aus organischem Hydroperoxid und Ascorbinsäure gemäß US-A 4,937,285 hergestellt werden.

Bei der Herstellung von Pfropfpolymerisaten vom ABS-Typ nach dem erfindungsgemäßen Verfahren wird die Pfropfreaktion vorteilhaft bei einem Monomerenumsatz von 95 % bis 100 % abgebrochen.

In einer bevorzugten Ausführungsform beträgt der Anteil an unpolymerisierter Vinylaromatenkomponente A) am Reaktionsgemisch zu jedem Zeitpunkt weniger als 12 Gew.-%, vorzugsweise weniger als 10 Gew.-% und besonders bevorzugt weniger als 9 Gew.-%.

Um sicherzugehen, dass der Anteil an unpolymerisierter Vinylaromatenkomponente A) nicht die genannten Höchstwerte überschreitet (oder der Anteil eines anderen Monomers den gewünschten Bereich verlässt), werden in einer bevorzugten Ausführungsform der Erfindung diese Monomerkonzentrationen mittels Raman-Spektroskopie inline oder online verfolgt. Im Rahmen der vorliegenden Erfindung bezeichnet online eine Vorgehensweise, bei der ein Teil der Reaktionsmischung beispielsweise durch eine Seitenschleife aus dem Reaktionsgefäß abgezweigt, vermessen und anschließend der Reaktionsmischung wieder zugefügt wird. Inline bedeutet, dass die Messung direkt im Reaktionsgefäß stattfindet.

Hierzu werden während der Pfropfpolymerisation in kurzen zeitlichen Abständen Raman-Spektren des Reaktorinhaltes im Bereich von $\nu_{min}$ =-4000 cm$^{-1}$ (Anti-Stokes-Bereich) und $\nu_{max}$ =4000 cm$^{-1}$ (Stokes-Bereich), bevorzugt $\nu_{min}$ =500 cm$^{-1}$ und $\nu_{max}$ =2500 cm$^{-1}$, besonders bevorzugt $\nu_{min}$=750 cm$^{-1}$ und $\nu_{max}$=1800 cm$^{-1}$ aufgenommen.

Die Häufigkeit der aufgezeichneten Messungen hängt von der Geschwindigkeit des Prozessdatenverlaufs ab. Üblicherweise erfolgen die Aufzeichnungen in Intervallen von 1 Sekunde bis 30 Minuten, vorzugsweise von 10 Sekunden bis 10 Minuten.

Geeignet für die Spektrenaufnahme sind im Prinzip alle kommerziell verfügbaren Raman-Spektrometersysteme, bevorzugt Fourier-Transform- und dispersive Raman-Spektrometer.

In einer bevorzugten Ausführungsform werden die betrachteten Monomerkonzentrationen aus den gemessenen Raman-Spektren nach der Methode der gewichteten Subtraktion wie nachfolgend beschrieben errechnet.

Aus den zuvor gemessenen und in digitalisierter Form in einer EDV-Einheit gespeicherten Raman-Spektren $I_{PB}(\nu)$ von Polybutadien (PB), $I_{PS}(\nu)$ von Polystyrol (PS), $I_{PAN}(\nu)$ von Polyacrylnitril (PAN), $I_{STY}(\nu)$ von Styrol (STY) und $I_{ACN}(\nu)$ von Acrylnitril (ACN) und dem aktuellen Spektrum $I(\nu)$ des Reaktorinhaltes werden aus der Bedingung

$$\sum_{\nu_{min}}^{\nu_{max}} \{I_K(\nu) - [f_{PB}{}^* \ I_{PB}(\nu) + f_{PS}{}^* \ I_{PS}(\nu) + f_{PAN}{}^* \ I_{PAN}(\nu) + f_{STY}{}^* \ I_{STY}(\nu) + f_{ACN}{}^* \ I_{ACN}(\nu) + f_k]\}^2$$

$$= \mathrm{Minimum}$$

die Faktoren $f_i$ errechnet, wobei die Summation über alle Datenpunkte der in gleicher Form digitalisierten Spektren $I_i(\nu)$ erfolgt.

Aus den Faktoren $f_i$ werden die Quotienten

$$Q_{PS} = f_{PS}/f_{PB}, \; Q_{PAN} = f_{PAN}/f_{PB}, \; Q_{STY} = f_{STY}/f_{PB} \; \text{und} \; Q_{ACN} = f_{ACN}/f_{PB}$$

und mit den zuvor bestimmten Kalibrierfaktoren K die Mengenanteile W von:

Polystyrol zu Polybutadien: $W_{PS} = K_{PS}{}^* \, Q_{PS}$
Polyacrylnitril zu Polybutadien: $W_{PAN} = K_{PAN}{}^* \, Q_{PAN}$
Styrol zu Polybutadien: $W_{STY} = K_{STY}{}^* \, Q_{STY}$
Acrylnitril zu Polybutadien: $W_{ACN} = K_{ACN}{}^* \, Q_{ACN}$

berechnet und daraus nach:

$$M_{PS} = W_{PS} * M_{PB} \, , \; M_{PAN} = W_{PAN} * M_{PB} \, , \; M_{STY} = W_{STY} * M_{PB} \; \text{und} \; M_{ACN} = W_{ACN} * M_{PB}$$

die absoluten Mengen von Polystyrol $M_{PS}$, Polyacrylnitril $M_{PAN}$, Styrol $M_{STY}$ und Acrylnitril $M_{ACN}$ im Reaktor ermittelt. Die Größe $M_{PB}$ ist während der Reaktion konstant. Die Menge des in den Reaktor eindosierten Polybutadiens ist mittels konventioneller Mengenmessung zu erfassen.

In einer besonders bevorzugten Ausführungsform werden in einem vorgeschalteten Kalibrierschritt die Faktoren $K_{PS}$, $K_{PAN}$, $K_{STY}$ und $K_{ACN}$ bestimmt, indem die Raman-Spektren $I_K(v)$ von Mischungen mit bekannten Mengenanteilen aufgenommen werden. Aus der Bedingung

$$\sum_{v_{min}}^{v_{max}} \{I_K(v) - [f_{PB}* \, I_{PB}(v) + f_{PS}* \, I_{PS}(v) + f_{PAN}* \, I_{PAN}(v) + f_{STY}* \, I_{STY}(v) + f_{ACN}* \, I_{ACN}(v) + f_k]\}^2$$

$$= \text{Minimum}$$

werden die Faktoren $f_i$ errechnet (gewichtete Subtraktion), daraus die Quotienten

$$Q_{PS} = f_{PS}/f_{PB}, \; Q_{PAN} = f_{PAN}/f_{PB}, \; Q_{STY} = f_{STY}/f_{PB} \; \text{und} \; Q_{ACN} = f_{PAN}/f_{PB}$$

ermittelt,
aus den bekannten Mengen M die Gewichtsteile W

$$W_{PS} = M_{PS}/M_{PB} \, , \; W_{PAN} = M_{PAN}/M_{PB} \, , \; W_{STY} = M_{STY}/M_{PB} \; \text{und} \; W_{ACN} = M_{ACN}/M_{PB}$$

und gemäß den Gleichungen

$$K_{PS} = W_{PS}/Q_{PS} \, , \; K_{PAN} = W_{PAN}/Q_{PAN} \, , \; K_{STY} = W_{STY}/Q_{STY} \; \text{und} \; K_{ACN} = W_{ACN}/Q_{ACN}$$

die Kalibrierfaktoren K berechnet.

Das erfindungsgemäße Verfahren zeichnet sich durch eine verbesserte Reaktionssicherheit während des gesamten Verlaufs der Pfropfpolymerisation aus.

Die durch das erfindungsgemäße Verfahren erhältlichen Pfropfpolymerisate zeichnen sich durch sehr gute mechanische Eigenschaften (wie beispielsweise gute Kerbschlagzähigkeiten) bei sehr hoher Reproduzierbarkeit aus.

Diese Pfropfpolymerisate eignen sich, vorzugsweise nach Abmischung mit mindestens einer kautschukfreien Harzkomponente, zur Herstellung von Formteilen, beispielsweise für Haushaltsgeräte, Kfz-Bauteile, Büromaschinen, Telefonen, Radio- und Fernsehgerätegehäuse, Möbel, Rohre, Freizeitartikel oder Spielzeug.

Als kautschukfreie Harzkomponenten werden vorzugsweise Copolymerisate des Styrols und Acrylnitrils im Gewichtsverhältnis 95:5 bis 50:50 verwendet, wobei Styrol und/oder Acrylnitril ganz oder teilweise durch $\alpha$-Methylstyrol, Methylmethacrylat oder N-Phenylmaleinimid ersetzt werden kann. Besonders bevorzugt sind solche Copolymerisate, deren Anteile an eingebauten Acrylnitril-Einheiten unterhalb von 30 Gew.-% liegen.

Diese Copolymerisate besitzen vorzugsweise gewichtsmittlere Molekulargewichte

Mw von 20 000 bis 200 000 bzw. Grenzviskositäten [η] von 20 bis 110 ml/g (gemessen in Dimethylformamid bei 25˚C).

Einzelheiten zur Herstellung dieser Copolymerisate sind beispielsweise in der DE-A 24 20 358 und der DE-A 27 24 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreie Harzkomponenten in den erfindungsgemäßen Formmassen möglich.

Im Folgenden wird die Erfindung durch Beispiele verdeutlicht, ohne sie jedoch auf diese Beispiele zu beschränken.

### Beispiel 1

(Erfindungsgemäß, Simulation eines Ausfalls der Initiatordosierung mit permanenter Überwachung durch Aufnahme von Raman-Spektren und korrigierende Maßnahmen bei Abweichungen vom Sollverhalten)

42 Gew.-Teile eines Monomerengemisches aus Styrol und Acrylnitril (Gew.-Verhältnis 67,5 : 32,5) und 0,15 Gew.-Teile tert.-Dodecylmercaptan werden innerhalb von 6 h bei 62˚C zu 58 Gew.-Teilen (gerechnet als Feststoff) eines Polybutadienlatex (Feststoffgehalt ca. 30 Gew.-%, mittlere Teilchengröße $d_{50}$ ca. 350 nm) dosiert. Parallel dazu werden 16,2 Gew.-Teile einer 7,4 % wässrigen Emulgatorlösung (Natriumsalz von Dresinate 731® der Abieta Chemie, Gersthofen, Deutschland) zudosiert. Der Reaktionsverlauf wird permanent durch Aufnahme von Raman-Spektren verfolgt. Nachdem die Raman-Spektren einen Anstieg von monomerem Styrol im Reaktionsgemisch auf über 8 Gew.-% (bezogen auf Polybutadien) anzeigten, wird der Monomerenzulauf gestoppt und 0,25 Gew.-Teile Kaliumpersulfat (in Form einer 2,5 %igen wässrigen Lösung) zugesetzt. Nach Abfall des Gehaltes an monomerem Styrol im Reaktionsgemisch auf unter 6 Gew.-% (bezogen auf Polybutadien) wird die Monomerendosierung weitergeführt und eine 3-stündige Dosierung von 0,25 Gew.-Teilen Kaliumpersulfat (in Form einer 2,5 %igen wässrigen Lösung) gestartet.

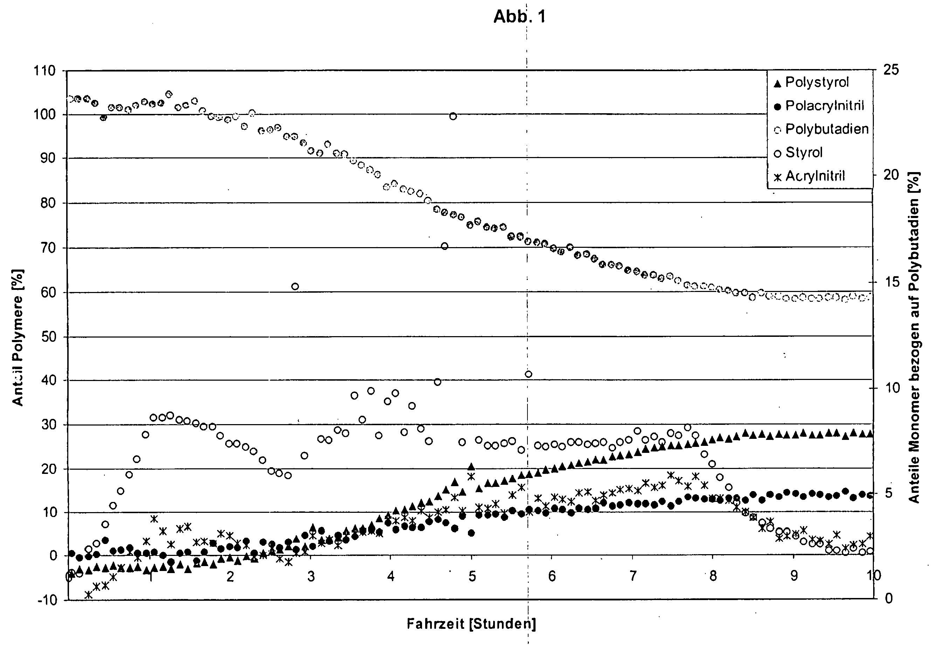

Die Gesamtreaktionszeit beträgt 9 h (6 h Reaktionszeit + 3 h Nachrührzeit bei 70˚C), der Reaktionsverlauf (ermittelt über Raman-Spektroskopie) ist in Abb.1 dargestellt.

### Beispiel 2

(Vergleichsversuch, Simulation eines Ausfalls der Initiatordosierung ohne permanente Überwachung durch Aufnahme von Raman-Spektren und ohne korrigierende Maßnahmen bei Abweichungen vom Sollverhalten)

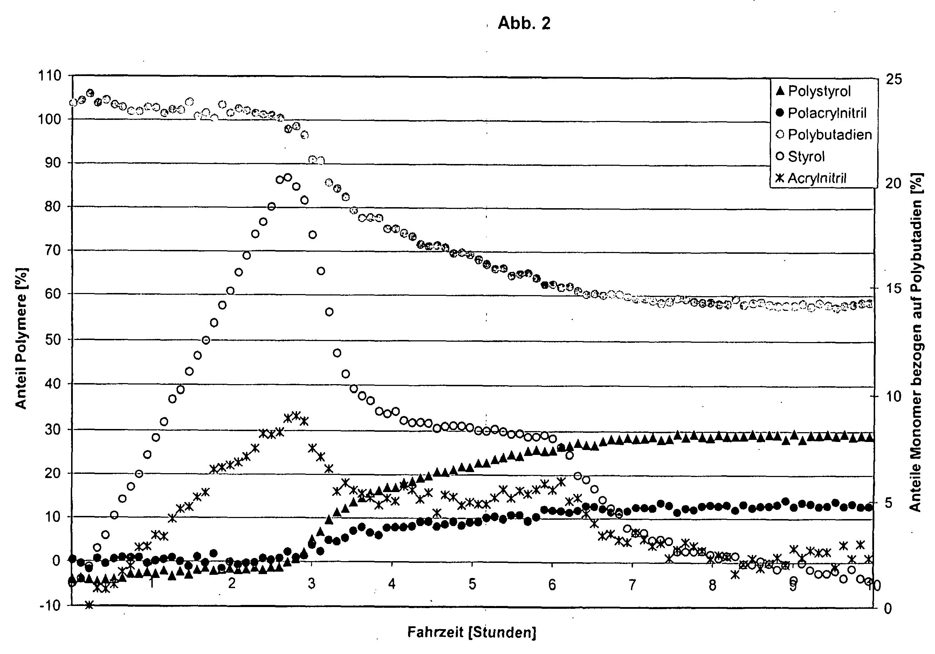

Versuch 1 wird wiederholt, wobei der Anstieg des monomeren Styrols im Reaktionsgemisch bis auf 20 Gew.-% (bezogen auf Polybutadien) erfolgt, bevor durch Zugabe von Kaliumpersulfat-lösung die Polymerisation ausgelöst wird. Die sonstigen Reaktionsbedingungen bleiben unverändert. Zur Illustration ist der Reaktionsverlauf (ermittelt über Raman-Spektroskopie) in Abb. 2 dargestellt.

### Beispiel 3

(Vergleichsversuch, Simulation eines Reaktionsverlaufs ohne Ausfall der Initiatordosierung, Referenzversuch für gewünschten Reaktionsverlauf)

Versuch 1 wird wiederholt, wobei vom Anfang an parallel zur Monomerendosierung eine Dosierung der Kaliumpersulfat-Lösung erfolgt. Die sonstigen Reaktionsbedingungen bleiben unverändert.

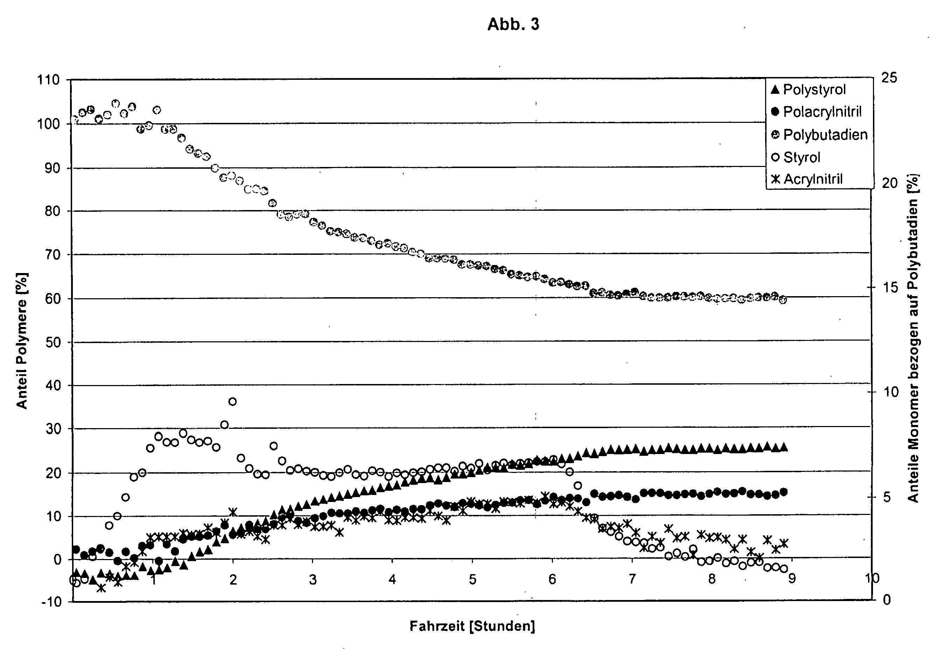

Zur Illustration ist der Reaktionsverlauf (ermittelt über Raman-Spektroskopie) in Abb. 3 dargestellt.

### Untersuchung und Ausprüfung der aus den Beispielen 1 bis 3 resultierenden Produkte

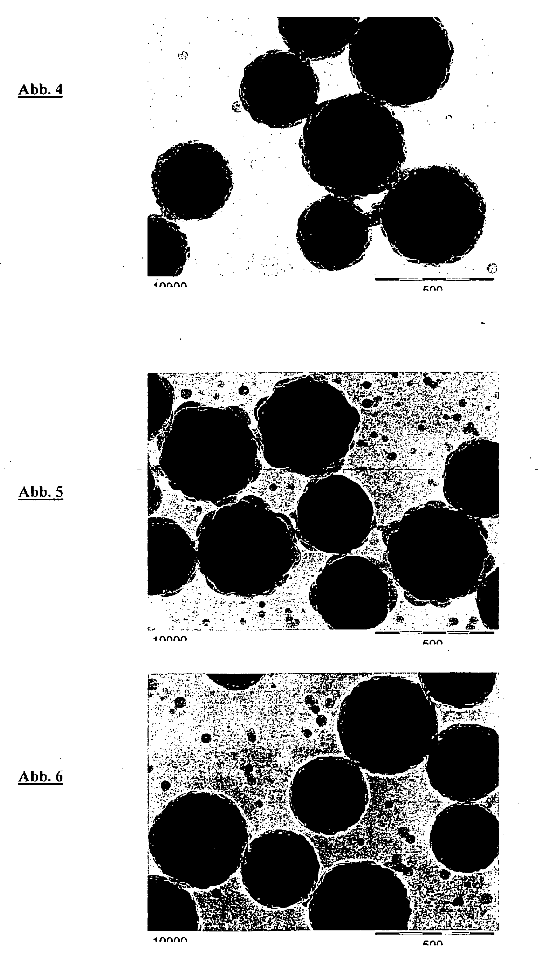

Zur elektronenmikroskopischen Charakterisierung werden Latexproben entnommen und nach Kontrastierung mit Osmiumtetroxid vermessen. Die in den Abbildungen 4, 5 und 6 dargestellten Morphologien zeigen, dass nur bei Überwachung des Reaktionsverlaufes durch Raman-spektroskopie und Durchführung korrigierender Maßnahmen eine Morphologie erhalten wird (Abb. 4, Produkt aus Beispiel 1, gleichmäßige Pfropfhülle), die der des Referenzversuches (Abb. 6, Produkt aus Beispiel 3) entspricht. Bei Nichtüberwachung und Auftreten von Fehldosierungen entsteht ein Produkt mit ungleichmäßiger Pfropfhülle (Abb. 5, Produkt aus Beispiel 2).

Die aus den Beispielen 1 bis 3 resultierenden Pfropfkautschuklatices wurden nach Zugabe eines phenolischen Antioxidans jeweils mit einer Magnesiumsulfat/Essigsäure-Mischung ausgefällt, wonach die resultierenden Pfropfpulver mit Wasser gewaschen und im Trockenschrank bei 70˚C getrocknet wurden.

Unter Verwendung dieser Pfropfkautschukpulver wurden in Tabelle 1 angegebenen Mischungen in einem Innenkneter hergestellt und durch Spritzgießen zu Prüfkörpern verarbeitet.

Dabei wurde als feinteiliger Pfropfkautschuk ein Produkt mit einem Polybutadiengehalt von 50 Gew.-% und einer aufgepfropften Styrol/Acrylnitril-Copolymer-Menge von 50 Gew.-% (Styrol:Acylnitril-Verhältnis 73:27) mit einem mittleren Teilchendurchmesser $d_{50}$ von ca. 120 nm eingesetzt.

Als SAN-Harz wurde ein Produkt mit einem mittleren Molekulargewicht $\overline{M}_w$ von ca. 85 000 (Styrol:Acrylnitril-Verhältnis 72:28) verwendet.

Alle Compounds enthielten als Additive 2 Gew.-Teile Ethylendiaminbisstearoylamid und 0,15 Gew.-Teile eines Silikonöls.

Die Ermittlung der Kerbschlagzähigkeit beim Raumtemperatur ($a_k^{RT}$, Einheit: $kJ/m^2$) erfolgte gemäß ISO 180/1A, die thermoplastische Fließfähigkeit (MVI, Einheit: $cm^3/10$ min) wurde nach DIN 53 735 U bestimmt.

Die ebenfalls in Tabelle 1 angegebenen Prüfwerte zeigen, dass bei Verwendung des erfindungsgemäß hergestellten Pfropfkautschuks Produkteigenschaften resultieren, die dem Referenzmaterial sehr ähnlich sind.

**Tabelle 1**: Zusammensetzungen und Prüfdaten der untersuchten Formmassen

| Pfropfkautschuk aus Beispiel 1 | Pfropfkautschuk aus Beispiel 2 | Pfropfkautschuk aus Beispiel 3 | feinteiliger Pfropfkautschuk | SAN-Harz | $a_k^{RT}$ $(kJ/m^2)$ | MVR $(cm^3/10$ min) |
|---|---|---|---|---|---|---|
| [Gew.-Teile] | [Gew.-Teile] | [Gew.-Teile] | [Gew.-Teile] | [Gew.-Teile] | | |
| 18 | - | - | 12 | 70 | 16,6 | 35,4 |
| - | 18 | - | 12 | 70 | 14,9 | 34,5 |
| - | - | 18 | 12 | 70 | 16,0 | 36,3 |

## Patentansprüche

1. Verfahren zur Herstellung von Pfropfpolymerisaten vom ABS-Typ nach dem Emulsionsverfahren, worin 5 bis 95 Gew.-%, eines Monomergemischs enthaltend

   A) 50 bis 99 Gewichtsteile mindestens eines Vinylaromaten
   B) 1 bis 50 Gewichtsteile mindestens ein Comonomer
   in Gegenwart von
   C) 95 bis 5 Gew.-% einer oder mehrerer Pfropfgrundlagen mit Glasübergangstemperaturen <10˚C,

   polymerisiert wird, **dadurch gekennzeichnet, dass** der Verlauf der Reaktion permanent durch die Aufnahme von Raman-Spektren des Reaktionsgemisches überwacht wird und bei Abweichungen der Konzentration vom gewünschten Wert der unpolymerisierten Vinylaromatenkomponente A) im Reaktionsgemisch von weniger als 12 Gew.-% die Zudosiergeschwindigkeit einzelner oder aller Monomerer und/oder des Initiators erhöht oder gesenkt wird, so dass sich der gewünschte Wert der Konzentration der Vinylaromatenkomponente A) im Reaktionsgemisch von weniger als 12 Gew.-% wieder einstellt.

2. Verfahren gemäß Anspruch 1, wobei aus den Raman-Spektren mittels gewichteter Subtraktion die Monomerkonzentration ermittelt werden.

3. Verfahren nach einem der Ansprüche 1 bis 2, wobei die Vinylaromaten A) Styrol, das Comonomer B) Acrylnitril und die Pfropfgrundlage C) ein Polybutadienkautschuk ist.

**Claims**

1. Process for preparation of graft polymers of ABS type by the emulsion process, by polymerizing from 5 to 95% by weight of a monomer mixture comprising

   A) from 50 to 99 parts by weight of at least one vinylaromatic
   B) from 1 to 50 parts by weight of at least one comonomer
   in the presence of
   C) from 95 to 5% by weight of one or more graft bases with glass transition temperatures <10˚C,

   **characterized in that** the course of the reaction is constantly monitored via the recording of Raman spectra of the reaction mixture and, in the event of deviations of the concentration from the desired value of the unpolymerized vinylaromatic component A) in the reaction mixture of less than 12% by weight, the feed rate of individual monomers or of all of the monomers and/or of the initiator is increased or lowered, so that the desired value of the concentration of the vinylaromatic component A) in the reaction mixture of less than 12% by weight is re-established.

2. Process according to Claim 1, where the monomer concentrations are determined from the Raman spectra by means of weighted subtraction.

3. Process according to Claim 1 or 2, where the vinylaromatics A) are styrene, the comonomer B is acrylonitrile, and the graft base C) is a polybutadiene rubber

**Revendications**

1. Procédé en vue de la préparation de polymères de greffage du type ABS conformément au procédé en émulsion, où on procède à la polymérisation de 5 à 95% en poids d'un mélange de monomères contenant

   A) de 50 à 99 parts en poids d'au moins un aromate vinylique
   B) de 1 à 50 parts en poids d'au moins un comonomère en présence
   C) de 95 à 5% en poids d'un ou de plusieurs constituants de base de greffage ayant des températures de transition vitreuses < 10˚C,

   **caractérisé en ce que** le déroulement de la réaction est surveillé en permanence par l'enregistrement de spectres Raman du mélange réactionnel et **en ce que**, lors de déviations de la concentration de la valeur souhaitée du composant d'aromate vinylique non polymérisé A) dans le mélange réactionnel de moins de 12 % en poids, la vitesse d'addition par dosage de monomères individuels ou de tous les monomères et/ou de l'agent amorceur est augmentée ou réduite de telle sorte que la valeur souhaitée de la concentration du composant d'aromate vinylique A) dans le mélange réactionnel s'ajuste à nouveau à moins de la valeur de 12 % en poids.

2. Procédé selon la revendication 1, la concentration en monomères étant déterminée à partir des spectres Raman par soustraction pondérée.

3. Procédé selon l'une quelconque des revendications 1 à 2, l'aromate vinylique A) étant le styrène, le comonomère B) étant l'acrylonitrile et le constituant de base de greffage C) étant un caoutchouc de polybutadiène.

**Abb. 1**

**Abb. 2**

EP 1 445 267 B1

Abb. 3

EP 1 445 267 B1

Abb. 4

Abb. 5

Abb. 6